# FASCICULE DE BREVET EUROPEEN

(11) **EP 1 927 508 B1**
(45) Date de publication et mention de la délivrance du brevet: **12.01.2011**
(21) Numéro de dépôt: 07301449.0
(22) Date de dépôt: 10.10.2007
(51) Int. Cl.: B60Q 1/04

(54) **Système de fixation d'un phare de véhicule automobile à trois fixations**
Dreipunkt-Befestigungssystem eines Kraftfahrzeugscheinwerfers
System for attaching an automobile headlight with three attachment points

(30) Priorité: 28.11.2006 FR 0655160
(43) Date de publication de la demande: 04.06.2008
(73) Titulaire: Peugeot Citroën Automobiles SA, 78943 Vélizy-Villacoublay Cedex (FR)
(72) Inventeur: Claret, Davy, 91620 Nozay (FR); Mackowiak, Stéphane, 93160 Noisy le Grand (FR)

(56) Documents cités:
- EP-A- 0 933 253
- EP-A2- 0 743 226
- FR-A1- 2 809 061
- JP-A- 5 124 468
- JP-A- 2000 071 863
- JP-A- 2006 027 420
- US-A- 4 318 161
- US-A- 5 660 456
- US-A1- 2005 073 854

## Description

L'invention concerne un système de montage d'un phare à un ou plusieurs éléments de structure d'un véhicule automobile, à plusieurs fixations incluant chacune une attache et un ancrage, l'attache étant rigidement solidaire d'un boîtier du phare et l'ancrage étant rigidement solidaire d'un élément de structure du véhicule ou inversement.

Il est connu du document EP-A2-0743226 de lier pair le biais d'une vis de serrage chacune des attaches, d'un phare de véhicule automobile à leur ancrage associé.

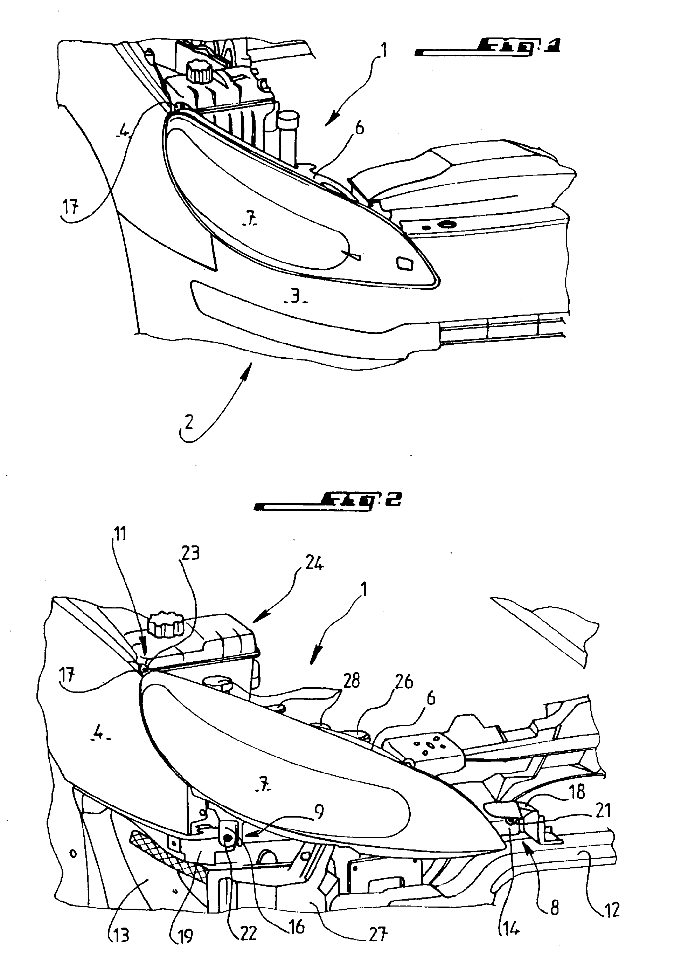

Le montage d'un tel phare 1 sur un véhicule automobile est représenté en perspective dans la figure 1 qui montre une partie avant droite 2 d'un véhicule, incluant un bouclier de pare-choc avant 3 et une aile avant droite 4 délimitant conjointement l'angle avant droit du véhicule.

Le phare 1 est formé principalement par un boîtier 6 fermé par une optique 7, il est monté sur des éléments structurels du véhicule au moyen d'une première, d'une deuxième et d'une troisième fixation repérées respectivement par 8, 9 et 11 dans la figure 2.

La première fixation 8 est située au niveau d'une partie avant du phare, la seconde fixation 9 est située au niveau d'une partie inférieure centrale du phare, et la troisième fixation 11 est située au niveau d'une partie arrière haute du phare.

Les éléments structurels par lesquels le phare est maintenu comprennent notamment l'aile 4, une traverse frontale inférieure repérée par 12, et un support 13 d'aile.

Chaque fixation comprend une patte solidaire du boîtier 6, et une embase solidaire d'un élément de structure du véhicule. Les pattes repérées par 14, 16 et 17 correspondent respectivement à la première seconde, et troisième attache. Seule la première et la seconde embase apparaissent sur la figure 2, en étant repérées par 18 et 19, respectivement.

Le montage du phare 1 avec ce système consiste à le mettre en position dans son logement, et à solidariser chaque fixation en vissant les trois vis correspondantes repérées par 21, 22 et 23. Après avoir effectué cette opération, le bouclier 3 peut être monté, de manière à recouvrir la première et la seconde fixation 8 et 9.

Comme visible dans les figures, la région située en arrière du phare 1 comprend différents organes secondaires tels qu'un réservoir de liquide 24, un goulot de remplissage 26 d'un autre réservoir 27, ainsi que d'autres organes repérés par 28.

Il s'avère que les différents éléments présents en arrière de ce phare obstruent l'accès à la face arrière de son boîtier, de sorte que le changement d'une lampe n'est possible qu'en démontant l'ensemble du phare 1, conformément aux indications ci-dessus, pour retirer et remplacer la lampe défectueuse.

Comme le bouclier 3 recouvre la première et la seconde attache, il est dans ce cas également nécessaire de démonter le bouclier pour pouvoir démonter le phare, afin de changer la lampe défectueuse.

De fait, un utilisateur ne peut pas changer les lampes du phare sans utiliser d'outillage spécifique, ce qui est notamment contraire à une réglementation récente spécifiant que les feux doivent être montés sur le véhicule de telle sorte que la source lumineuse puisse être correctement remplacée conformément aux instructions du constructeur sans l'aide d'autres outils que ceux fournis par le constructeur.

Le but de l'invention est de remédier à cet inconvénient en proposant un système de montage du phare de manipulation simple facilitant le changement d'une lampe défectueuse.

A cet effet, l'invention a pour objet un système de montage d'un phare à un ou plusieurs éléments de structure d'un véhicule automobile selon la revendication 1.

L'invention concerne également un système tel que défini ci-dessus, dans lequel la troisième fixation est située au niveau d'une partie arrière du phare lorsqu'il est monté, la troisième fixation est une fixation rapide du type un quart de tour ou à vis.

L'invention concerne également un système tel que défini ci-dessus, dans lequel la tige de l'attache de la première fixation s'étend selon une direction transversale.

L'invention concerne également un système tel que défini ci-dessus, comprenant une fixation emboîtable incluant un manchon en caoutchouc emboîté sur l'embout.

L'invention concerne également un système tel que défini ci-dessus, dans lequel le manchon a une extrémité fermée et une extrémité opposée pourvue d'une collerette plane.

L'invention concerne également un système tel que défini ci-dessus, dans lequel la première fixation emboîtable comportant le manchon est une liaison rotule permettant un pivotement du phare une fois ce dernier emboîté.

L'invention concerne également un système tel que défini ci-dessus, dans lequel l'ancrage est une partie supérieure avant d'une aile.

L'invention a également pour objet un procédé de montage d'un phare équipé du système de montage tel que défini ci-dessus, dans lequel le phare est d'abord emboîté sur un ou plusieurs éléments de structure du véhicule, l'emboîtement se faisant selon un déplacement transversale du phare par rapport au véhicule afin d'engager la première tige ou embout dans la première embase, puis selon un abaissement de l'extrémité arrière du phare alors guidée de manière à emboiter la seconde fixation par engagement du second embout dans le seconde embase.

L'invention concerne également un procédé tel que défini ci-dessus, dans lequel le phare est ensuite bloqué sur l'un des éléments de structure du véhicule, le blocage complet du phare consistant à lier solidairement la patte de fixation à l'aile au moyen de la vis, le vissage s'effectuant autour d'un axe vertical s'étendant parallèlement à la seconde tige.

L'invention sera maintenant décrite plus en détail, et en référence aux figures annexées.
La figure 1 est une vue d'ensemble d'un phare monté sur un véhicule avec un système de fixation connu ;
La figure 2 est une vue d'ensemble correspondant à la figure 1 dans laquelle les éléments de structure du véhicule sont apparents ;
La figure 3 est une vue d'ensemble montrant le phare monté sur la structure du véhicule avec le système selon l'invention ;
La figure 4 est une vue en perspective de la seconde attache emboîtable du système selon l'invention ;
La figure 5 est une vue en perspective de la première attache emboîtable du système selon l'invention ;
La figure 6 est une autre vue en perspective de la première attache emboîtable du système selon l'invention ;
La figure 7 est une vue en coupe de la première attache du système selon l'invention.
La figure 8 est une vue d'ensemble illustrant une première étape de montage du phare avec le système selon l'invention.

L'idée à la base de l'invention est de prévoir les deux fixations inférieures du phare de type emboîtable, de sorte qu'il n'est pas nécessaire d'accéder à ces fixations pour les solidariser ou pour les désolidariser

Le montage du phare consiste ainsi à le positionner pour emboîter la première et la seconde fixation qui sont situées en partie basse du phare, puis à visser la troisième fixation pour assurer son blocage complet en position, cette troisième fixation étant située en partie haute du phare.

Le système de montage de phare selon l'invention est prévu pour un phare 31 du même type le phare 1 représenté sur les figures 1 et 2, c'est grâce à ce système que le phare est solidement maintenu sur le véhicule.

Ce phare 31 est maintenu, comme dans l'exemple des figures 1 et 2, par une première, une seconde et une troisième fixation repérées par 32, 33 et 34, qui le solidarisent à des éléments de structure du véhicule.

Ces éléments de structures sont similaires à ceux des figures 1 et 2, il s'agit également d'une traverse frontale inférieure 36 pour la première fixation 32, d'un support 37 d'aile avant droite 38 pour la seconde fixation 33, et d'une partie supérieure avant de l'aile 38 pour la troisième fixation 34.

Le phare 31 comprend également un boîtier 39 ouvert vers l'avant et fermé par une optique non représentée. Comme le montrent les figures, le contour du boîtier, c'est-à-dire la partie sur laquelle vient en appui le bord de l'optique, a une forme générale oblongue définissant une extrémité avant du phare et une extrémité arrière du phare.

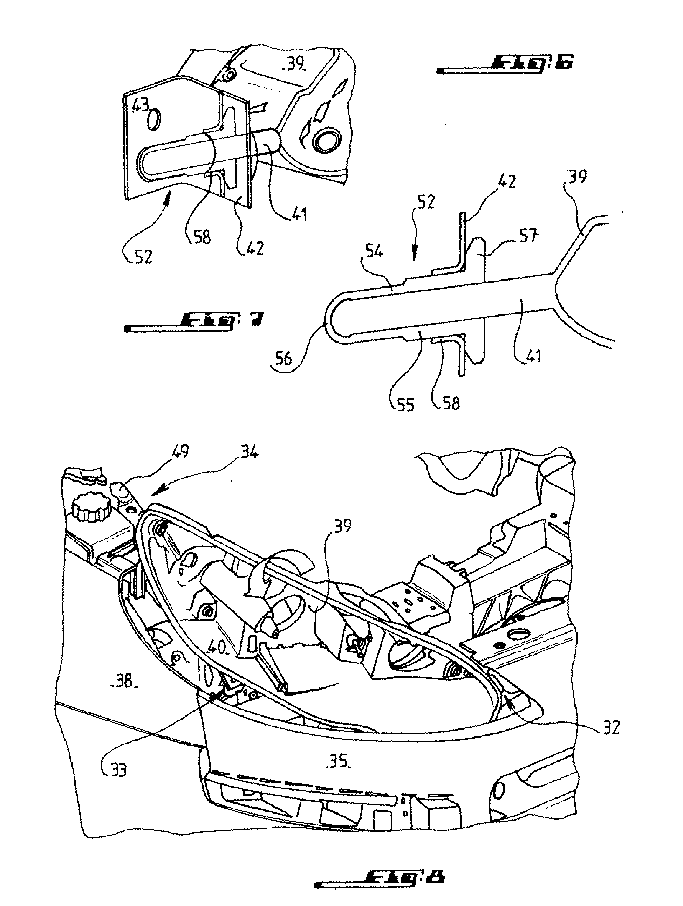

Lorsque ce phare est monté, la première et la seconde fixation sont masquées par une partie du pare choc avant 35, qualifiée parfois de peau de parechoc, représentée en figure 8.

Dans le système de fixation selon l'invention, la première fixation 32 qui est située au niveau de l'extrémité avant du phare 31 et la seconde fixation 33 qui est située dans une région centrale de la face inférieure 40 du boîtier 39 sont des attaches du type emboîtables. La troisième attache 34 qui est située au niveau de l'extrémité arrière du phare dans une partie arrière haute du phare lorsqu'il est monté, est une attache à vis.

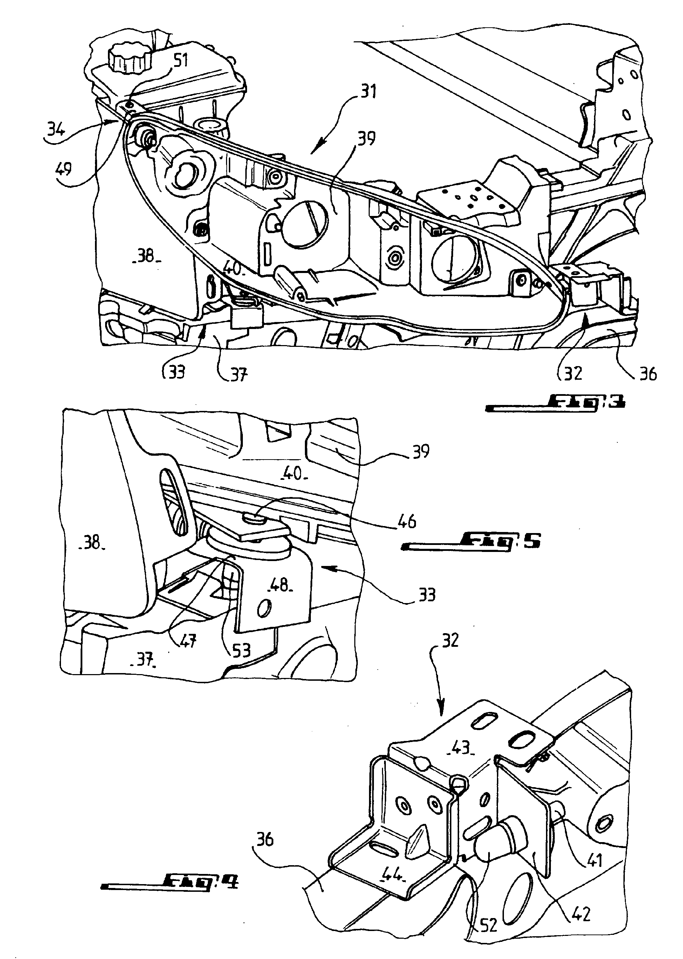

La première fixation qui est emboîtable est visible de façon plus détaillée dans la figure 4, elle comprend une attache se présentant sous forme d'une première tige, et un ancrage sous forme d'une première embase à ouverture centrale pour recevoir cette tige.

La première tige ou embout 41 est rigidement solidaire de l'extrémité avant du phare 31, c'est-à-dire de son boîtier 39, et la première embase 42 dont l' ouverture centrale apte à recevoir la tige est repérée par 41, est rigidement solidaire de la structure du véhicule.

Cette première embase 42 a une forme générale plane à contour carré, elle constitue une partie d'une première patte 43 en tôle soudée qui est solidarisée à la traverse 36 par une seconde patte 44 en tôle pliée qui est soudée à cette première patte 43 et à la traverse 36.

La première embase 42 s'étend parallèlement à un plan de symétrie longitudinal du véhicule, de sorte que lorsque la tige 41 est engagée dans son ouverture centrale, cette première tige 41 s'étend selon une direction sensiblement transversale.

La seconde fixation 33 qui est représentée plus en détail dans la figure 5 comprend, de manière analogue, une seconde tige 46 ou embout rigidement solidaire d'une région centrale 40 d'une face inférieure du boîtier 39, tout en s'étendant selon une direction normale à cette face.

Elle coopère avec une seconde embase 47 ayant également une forme générale plane à contour carré présentant un trou central, ou ouverture, apte à recevoir la seconde tige 46. Cette seconde embase fait partie d'une patte en tôle 48 qui est pliée à angle droit en ayant sa partie inférieure ou verticale soudée au support 37 d'aile.

La seconde embase 47 est orientée parallèlement à un plan horizontal, de sorte que lorsque la seconde tige 46 est emboîtée dans celle-ci, elle s'étend verticalement.

La première et la seconde embase 42 et 47 sont donc perpendiculaires l'une à l'autre, et la première et la seconde tige 41 et 46 sont aussi perpendiculaires l'une à l'autre.

La troisième fixation 34 est une fixation à vis, comprenant une patte percée simple 49 rigidement solidaire du boîtier 39 apte à venir en vis-à-vis d'un trou correspondant d'une partie supérieure avant de l'aile 38. Le montage de cette troisième fixation consiste à mettre la patte percée 49 en vis-à-vis du trou correspondant taraudé de l'aile 38, et à visser et serrer une vis 51 dans ce trou, à travers la patte.

La première et la seconde tige 41 et 46 sont pourvues chacune, respectivement, d'un premier et d'un second manchon repérés par 52 et 53. Le manchon qui est représenté de manière plus détaillée dans les figures 6 et 7 a une forme générale de chapeau.

Il comprend une première partie tubulaire 54 de faible diamètre ayant une extrémité 56 qui est fermée, se prolongeant par une autre partie tubulaire 55 de plus fort diamètre, ou épaulement, se terminant par une autre extrémité, opposée à l'extrémité 56. Cette autre extrémité est ouverte tout en étant prolongée par une collerette plane 57 de diamètre externe fortement supérieur aux diamètres des portions tubulaires.

Ce manchon est monté serré sur la tige qui le porte, tant dans le cas de la première tige 41 que dans le cas de la seconde tige 46. Il est apte à coulisser dans l'ouverture de l'embase qui le reçoit, telle que l'ouverture 58 de l'embase 42.

A cet effet, les ouvertures centrales des embases 42 et 47 sont avantageusement prévues avec un décolletage pour offrir une surface d'appui continue et courbe au manchon, afin d'éviter qu'il ne s'use sous l'effet de vibrations, voire durant les opérations de montage ou de démontage du phare sur le véhicule.

Le montage du phare équipé du système selon l'invention consiste ainsi à le positionner dans son logement, de façon inclinée, c'est-à-dire en maintenant en hauteur son extrémité arrière. Le phare est ensuite déplacé transversalement pour engager la première tige ou embout 41 dans la première embase 42, ce qui correspond à la situation de la figure 8.

A ce stade, le phare peut pivoter principalement autour d'un axe horizontal situé au niveau de son extrémité avant, tout en pouvant aussi tourner légèrement autour d'un axe vertical et d'un axe longitudinal situés au niveau de son extrémité avant. Ces autres mouvements de rotation sont rendus possibles par le manchon élastique 52 qui fait de la première fixation emboîtable une liaison rotule une fois qu'elle a été emboîtée.

L'extrémité arrière du phare peut alors être abaissée et guidée de manière à emboîter la seconde fixation par engagement du second embout 46 dans la seconde embase 47.

Une fois l'emboîtement de la seconde fixation effectué, le blocage complet du phare peut alors être effectué, en vissant la vis 51 dans la partie supérieure de l'aile 38, à travers la patte de fixation 49.

Comme visible dans les figures, cette vis 51 s'engage verticalement, c'est-à-dire parallèlement à la seconde tige 46, une fois que le phare est en position. La partie supérieure de l'aile 38 dans laquelle se visse la vis 51 est par exemple une patte supérieure 58 présentant une face horizontale, comme illustré en figure 8.

Le démontage du phare, par exemple pour changer une lampe défectueuse, s'effectue selon l'ordre inverse, c'est-à-dire en dévissant d'abord la vis 51 puis en retirant le phare par désemboîtement de la seconde puis de la première fixation.

La vis 51 peut être du type à fixation rapide, c'est-à-dire qu'elle ne nécessite qu'une rotation selon un quart de tour afin de lier solidairement ou désolidariser le phare à la patte de fixation 49, selon le sens de rotation. Le recours à une fixation rapide de ce genre est avantageux en ce sens qu'il ne nécessite pas un outil spécifique pour le montage ou le démontage du phare.

## Revendications

1. Système de montage d'un phare (31) à un ou plusieurs éléments de structure (36, 37, 38) d'un véhicule automobile, ce système comprenant plusieurs fixations (32, 33, 34) incluant chacune une attache (41, 46, 49) et un ancrage (42, 47, 38), l'attache étant rigidement solidaire d'un boîtier (39) du phare (31) et l'ancrage (42, 47, 38) étant rigidement solidaire d'un élément de structure (36, 37, 38) du véhicule, ou inversement, ledit système de montage comprend une première et une seconde fixation emboîtable (32, 33) se montant par emboîtement d'une attache (41, 46) dans un ancrage (42, 47) et comprenant une attache (41, 46) sous forme d'un embout ou tige et un ancrage (42, 47) incluant une embase ayant une ouverture centrale pour recevoir cet embout ou tige, ledit système comprend également une troisième fixation étant une fixation à vis (34) se montant par vissage dans l'ancrage (38) d'une vis (51) traversant l'attache (49), l'attache étant sous forme d'une patte (49) percée, l'ancrage étant sous forme d'une assise (38) ayant une ouverture centrale éventuellement taraudée, **caractérisé en ce que** la première fixation (32) est située au niveau d'une partie avant du phare (31) lorsqu'il est monté et inclut une première attache (41), et **en ce que** la seconde fixation (33) est située au niveau d'une face inférieure (40) du phare (31) lorsqu'il est monté et inclut une seconde attache (46), les embouts ou tiges de la première et de la seconde attache (41, 46) étant perpendiculaires l'un à l'autre de sorte que la première et la seconde fixation (32, 33) soient emboîtables, la tige de la seconde fixation (39) s'étendant selon une direction verticale.

2. Système selon la revendication 1, **caractérisé en ce que** la troisième fixation (34) est située au niveau d'une partie arrière du phare (31) lorsqu'il est monté, et **en ce que** la troisième fixation (34) est une fixation rapide du type un quart de tour ou à vis.

3. Système selon la revendication 2, dans lequel la tige de l'attache(41) de la première fixation s'étend selon une direction transversale.

4. Système selon l'une des revendications 1 à 3, comprenant une fixation emboîtable incluant un manchon en caoutchouc (52, 53) emboîté sur l'embout (41, 46).

5. Système selon la revendication 4, dans lequel le manchon (52, 53) a une extrémité (56) fermée et une extrémité opposée pourvue d'une collerette plane (57).

6. Système selon la revendication 4 ou 5, dans lequel la première fixation emboîtable comportant le manchon (52) est une liaison rotule permettant un pivotement du phare une fois ce dernier emboîté.

7. Système selon l'une des revendications 1 à 6, dans lequel l'ancrage (38) est une partie supérieure avant d'une aile.

8. Procédé de montage d'un phare équipé du système de montage conforme à l'une quelconque des revendications précédentes, dans lequel le phare est d'abord emboîté sur un ou plusieurs éléments de structure du véhicule, l'emboîtement se faisant selon un déplacement transversale du phare par rapport au véhicule afin d'engager la première tige ou embout (41) dans la première embase (42), puis selon un abaissement de l'extrémité arrière du phare alors guidée de manière à emboiter la seconde fixation par engagement du second embout (46) dans le seconde embase (47).

9. Procédé selon la revendication 8 dans lequel le phare est ensuite bloqué sur l'un des éléments de structure du véhicule, le blocage complet du phare consistant à lier solidairement la patte de fixation (49) à l'aile (38) au moyen de la vis (51), le vissage s'effectuant autour d'un axe vertical s'étendant parallèlement à la seconde tige (46).

## Claims

1. System for mounting a headlight (31) to one or more structural elements (36, 37, 38) of a motor vehicle, this system comprising several fixings (32, 33, 34) each including a fastener (41, 46, 49) and an anchor (42, 47, 38), the fastener being rigidly integral with a casing (39) of the headlight (31) and the anchor (42, 47, 38) being rigidly integral with a structural element (36, 37, 38) of the vehicle, or vice versa, the said mounting system comprises a first and a second engageable fixing (32, 33), being mounted by engagement of a fastener (41, 46) in an anchor (42, 47) and comprising a fastener (41, 46) in the form of an end piece or rod and an anchor (42, 47) including a base having a central opening to receive this end piece or rod, the said system also comprises a third fixing being a screw fixing (34) being mounted by screwing in the anchor (38) by a screw (51) passing through the fastener (49), the fastener being in the form of a bored lug (49), the anchor being in the form of a seat (38) having a central opening, tapped if applicable, **characterized in that** the first fixing (32) is situated at the level of a front part of the headlight (31) when it is mounted and includes a first fastener (41), and **in that** the second fixing (33) is situated at the level of a lower face (40) of the headlight (31) when it is mounted and includes a second fastener (46), the end pieces or rods of the first and the second fasteners (41, 46) being perpendicular with respect to each other such that the first and the second fixing (32, 33) are engageable, the rod of the second fixing (33) extending along a vertical direction.

2. System according to Claim 1, **characterized in that** the third fixing (34) is situated at the level of a rear part of the headlight (31) when it is mounted, and **in that** the third fixing (34) is a quick fixing of a quarter-turn or screw type.

3. System according to Claim 2, in which the rod of the fastener (41) of the first fixing extends along a transverse direction.

4. System according to one of Claims 1 to 3, comprising an engageable fixing including a rubber sleeve (52, 53) engaged on the end piece (41, 46).

5. System according to Claim 4, in which the sleeve (52, 53) has a closed end (56) and an opposite end provided with a flat flange (57).

6. System according to Claim 4 or 5, in which the first engageable fixing comprising the sleeve (52) is a swivel connection permitting a pivoting of the headlight once the latter is engaged.

7. System according to one of Claims 1 to 6, in which the anchor (38) is an upper part having a wing.

8. Method for mounting a headlight equipped with the mounting system according to any one of the preceding claims, in which the headlight is firstly engaged on one or more structural elements of the vehicle, the engagement being carried out according to a transverse displacement of the headlight with respect to the vehicle so as to engage the first rod or end piece (41) in the first base (42), then according to a lowering of the rear end of the headlight then guided so as to engage the second fixing by engagement of the second end piece (46) in the second base (47).

9. Method according to Claim 8 in which the headlight is then locked on one of structural elements of the vehicle, the complete locking of the headlight consisting in integrally linking the fixing lug (49) to the wing (38) by means of the screw (51), the screwing being carried out about a vertical axis extending parallel to the second rod (46).

## Patentansprüche

1. System zur Montage eines Scheinwerfers (31) auf ein oder mehrere Strukturelemente (36, 37, 38) eines Kraftfahrzeugs, wobei dieses System mehrere Befestigungen aufweist (32, 33, 34), die jeweils ein Verbindungselement (41, 46, 49) und eine Verankerung (42, 47, 38) aufweisen, wobei das Verbindungselement fest mit einem Gehäuse (39) des Scheinwerfers (31) verbunden ist und die Verankerung (42, 47, 38) fest mit einem Strukturelement (36, 37, 38) des Fahrzeugs verbunden ist oder umgekehrt, wobei das Montagesystem eine erste und eine zweite einpassbare Befestigung (32, 33) aufweist, die durch Einpassen eines Verbindungselements (41, 46) in eine Verankerung (42, 47) montiert wird und ein Verbindungselement (41, 46) in Form eines Ansatzes oder Schafts und eine Verankerung (42, 47) aufweist, die einen Sockel umfasst, der eine zentrale Öffnung hat, um diesen Ansatz oder Schaft aufzunehmen, wobei das System auch eine dritte Befestigung aufweist, die eine Schraubbefestigung (34) ist, die durch Schrauben in die Verankerung (38) einer Schraube (51), die das Verbindungselement (49) durchquert, montiert wird, wobei das Verbindungselement die Form einer durchbohrten Pratze (49) hat, wobei die Verankerung die Form einer Grundplatte (38) hat, die eine zentrale Öffnung hat, die eventuell ein Innengewinde hat, **dadurch gekennzeichnet, dass** die erste Befestigung (32) auf dem Niveau eines vorderen Teils des Scheinwerfers (31) liegt, wenn er montiert ist und ein erstes Verbindungselement (41) aufweist, und dass die zweite Befestigung (33) auf dem Niveau einer Unterseite (40) des Scheinwerfers (31) liegt, wenn er montiert ist und ein zweites Verbindungselement (46) aufweist, wobei die Ansätze oder Schäfte des ersten und des zweiten Verbindungselements (41, 46) zueinander im rechten Winkel stehen, so dass die erste und die zweite Befestigung (32, 33) einpassbar sind, wobei sich der Schaft der zweiten Befestigung (33) entlang einer vertikalen Richtung erstreckt.

2. System nach Anspruch 1, **dadurch gekennzeichnet, dass** sich auf dem Niveau eines hinteren Teils des Scheinwerfers (31), wenn er montiert ist, eine dritte Befestigung (34) befindet, und dass die dritte Befestigung (34) eine Schnellbefestigung des Typs Vierteldrehung oder mit Schraube ist.

3. System nach Anspruch 2, bei dem sich der Schaft des Verbindungselements (41) der ersten Befestigung entlang einer Querrichtung erstreckt.

4. System nach einem der Ansprüche 1 bis 3, das eine einpassbare Befestigung aufweist, die einen Stutzen aus Kautschuk (52, 53) aufweist, der auf dem Ansatz (41, 46) einpasst wird.

5. System nach Anspruch 4, bei dem der Stutzen (52, 53) ein geschlossenes Ende (56) und ein entgegen gesetztes Ende, das mit einem flachen Kragen (57) versehen ist, hat.

6. System nach Anspruch 4 oder 5, bei dem die erste einpassbare Befestigung, die den Stutzen (52) aufweist, eine Gelenkverbindung ist, die ein Schwenken des Scheinwerfers erlaubt, sobald dieser eingepasst ist.

7. System nach einem der Ansprüche 1 bis 6, bei dem die Verankerung (38) ein vorderer oberer Teil eines Flügels ist.

8. Verfahren zur Montage eines Scheinwerfers, der mit einem Montagesystem nach einem der vorhergehenden Ansprüche versehen ist, bei dem der Scheinwerfer zuerst auf einem oder mehreren Strukturelementen des Fahrzeugs eingepasst wird, wobei das Einpassen gemäß einer Querbewegung des Scheinwerfers zum Fahrzeug erfolgt, um den ersten Schaft oder Ansatz (41) in den ersten Sockel (42) einzuführen, dann gemäß einem Senken des hinteren Endes des Scheinwerfers, der dabei derart geführt wird, dass die zweite Befestigung durch das Einfügen des zweiten Ansatzes (46) in den zweiten Sockel (47) geführt wird.

9. Verfahren nach Anspruch 8, bei dem der Scheinwerfer danach auf einem der Strukturelemente des Fahrzeugs blockiert wird, wobei das komplette Blockieren des Scheinwerfers darin besteht, die Befestigungspratze (49) mit dem Flügel (38) mittels der Schraube (51) fest zu verbinden, wobei das Schrauben um eine vertikale Achse erfolgt, die sich parallel zu dem zweiten Schaft (46) erstreckt.
